# EUROPEAN PATENT APPLICATION

(11) **EP 4 832 460 A1**
(43) Date of publication of application: **28.10.2026**
(21) Application number: 25744411.7
(22) Date of filing: 02.01.2025
(51) Int. Cl.: H04L 69/16

(54) **DATA TRANSMISSION METHODS AND SYSTEM**

(30) Priority: 26.01.2024 CN 202410120432
(71) Applicant: Huawei Technologies Co., Ltd., Shenzhen, Guangdong 518129 (CN)
(72) Inventor: GOU, Wenjin, Shenzhen, Guangdong 518129 (CN); LI, Sicong, Shenzhen, Guangdong 518129 (CN); ZHU, Jia, Shenzhen, Guangdong 518129 (CN)
(74) Representative: MERH-IP Matias Erny Reichl Hoffmann Patentanwälte PartG mbB
(86) International application number: PCT/CN2025/070273
(87) International publication number: WO 2025/156965

(57) **Abstract**

A data transmission method and system are disclosed, and relate to the computer field. The method includes: A receiving end sends a data storage address and completion notification information to a transmitting end; the transmitting end stores data in the receiving end through a network interface card of the receiving end based on the data storage address, where the transmitting end sends the completion notification information to the network interface card when sending a last data packet of the data; and the network interface card sends the completion notification information to the receiving end upon storage of the last data packet in the receiving end, to notify the receiving end that data migration is completed. The transmitting end and the receiving end negotiate the completion notification information in advance. The transmitting end sends the completion notification information to the network interface card when sending the last data packet of the data, so that the network interface card sends the completion notification information to the receiving end upon storage of the last data packet in the receiving end, to notify the receiving end that the data migration is completed, and no additional notification message needs to be sent, thereby simplifying a communication procedure and improving communication efficiency.

## Description

This application claims priority to Chinese Patent Application No. 202410120432.X, filed with the China National Intellectual Property Administration on January 26, 2024, and entitled "DATA TRANSMISSION METHOD AND SYSTEM", which is incorporated herein by reference in its entirety.

### TECHNICAL FIELD

This application relates to the computer field, and in particular, to a data transmission method and system.

### BACKGROUND

Currently, communication between a source process of a transmitting end and a destination process of a receiving end primarily relies on a message passing interface (Message Passing Interface, MPI) to perform data exchange. To increase a data transmission rate, data transmission may be performed between the transmitting end and the receiving end based on a remote direct memory access (Remote Direct Memory Access, RDMA) technology, to reduce data transmission latency. Because both an RDMA write operation and an RDMA read operation are RDMA one-sided communication, the receiving end of data is unaware of the RDMA write operation and the RDMA read operation. For example, if the transmitting end performs a write operation on the receiving end, and the receiving end is unaware of the write operation, the transmitting end needs to additionally send a notification message to notify the receiving end that data exchange is completed; or if the receiving end performs a read operation on the transmitting end, and the transmitting end is unaware of the read operation, the receiving end needs to additionally send a notification message to notify the transmitting end that data exchange is completed. After data migration between the transmitting end and the receiving end is completed, an additional notification message is required to notify that the data migration is completed. Consequently, a communication procedure between the transmitting end and the receiving end is complex and communication efficiency is reduced.

### SUMMARY

This application provides a data transmission method and system, to simplify a communication procedure and effectively improve communication efficiency.

According to a first aspect, a data transmission method is provided. The method includes: A receiving end sends a data storage address and completion notification information to a transmitting end; the transmitting end stores data in the receiving end through a network interface card of the receiving end based on the data storage address, where the transmitting end sends the completion notification information to the network interface card when sending a last data packet of the data; and the network interface card sends the completion notification information to the receiving end upon storage of the last data packet in the receiving end, to notify the receiving end that data migration is completed.

For a case in which the transmitting end additionally sends a notification message to the receiving end to indicate that the data migration is completed, a communication procedure is complex and communication efficiency is low. According to the solution provided in this application, the transmitting end and the receiving end negotiate the completion notification information in advance. The transmitting end sends the completion notification information to the network interface card when sending the last data packet of the data, so that the network interface card sends the completion notification information to the receiving end upon storage of the last data packet in the receiving end, to notify the receiving end that the data migration is completed, and no additional notification message needs to be sent, thereby simplifying a communication procedure and improving communication efficiency.

In a possible implementation, the transmitting end communicates with the receiving end according to an RDMA protocol. That the receiving end sends the data storage address and the completion notification information to the transmitting end includes: The receiving end carries the completion notification information in a reserved field of a negotiation message of the data storage address, and sends the negotiation message to the transmitting end.

In this case, the completion notification information is carried in the reserved field of the negotiation message, and a format of the message does not need to be changed, so that modifications to the protocol are reduced and protocol compatibility is improved, to simplify a communication procedure and improve communication efficiency.

In another possible implementation, when the transmitting end sends the last data packet of the data, the completion notification information is carried in a reserved field of the last data packet.

In another possible implementation, the method further includes: The network interface card obtains the completion notification information from the reserved field of the data packet after receiving the data packet.

In this case, the completion notification information is carried in a reserved field of a service message, so that modifications to the protocol are reduced, protocol compatibility is improved, and no additional notification message needs to be sent, to simplify a communication procedure and improve communication efficiency.

In another possible implementation, the completion notification information includes a notification address and a notification value, the notification address is an address into which the notification value is to be written at the receiving end, and the notification value indicates that the data migration is completed. The method further includes: The network interface card obtains the completion notification information from the data packet, and writes the notification value to the notification address; and the receiving end obtains the notification value from the notification address, to confirm that the data migration is completed.

According to a second aspect, a data transmission method is provided. The method includes: A transmitting end sends a data storage address and completion notification information to a receiving end; the receiving end reads data through a network interface card of the transmitting end based on the data storage address, where the receiving end sends the completion notification information to the network interface card of the transmitting end when sending a last data packet for data reading; and the network interface card sends the completion notification information to the transmitting end after sending, to the receiving end, data to be read as indicated by the last data packet, to notify the transmitting end that data migration is completed.

In a possible implementation, the transmitting end communicates with the receiving end according to an RDMA protocol. That the transmitting end sends the data storage address and the completion notification information to the receiving end includes: The transmitting end carries the completion notification information in a reserved field of a negotiation message of the data storage address, and sends the negotiation message to the receiving end.

In another possible implementation, when the receiving end sends the last data packet corresponding to the data, the completion notification information is carried in a reserved field of the data packet.

In another possible implementation, the method further includes: The network interface card of the transmitting end obtains the completion notification information from the reserved field of the data packet after receiving the data packet.

In another possible implementation, the completion notification information includes a notification address and a notification value, the notification address is an address into which the notification value is to be written at the receiving end, and the notification value indicates that the data migration is completed. The method further includes: The network interface card of the transmitting end obtains the completion notification information from the data packet, and writes the notification value to the notification address; and the transmitting end obtains the notification value from the notification address, to confirm that the data migration is completed.

According to a third aspect, a data transmission method is provided. The method is performed by a transmitting end. The method includes: receiving a first negotiation message, where the first negotiation message includes a notification value and a first notification address, and a first value of the notification value indicates that data migration is completed; and sending a first data packet to a receiving end, where the first data packet indicates to write first data of a first service to the receiving end, the first data packet includes the first data of the first service, the notification value, and the first notification address, the first notification address indicates storage space of the receiving end, and the storage space of the receiving end is used to store the notification value.

In a possible implementation, the notification value and the first notification address are located in a reserved field of the first data packet.

In another possible implementation, the first data packet further includes a first storage address and an access permission. The first storage address indicates that storage space of the receiving end is used to store the first data of the first service, and the access permission indicates that access to the storage space indicated by the first storage address is permitted.

When a large amount of data of the first service is transmitted between the transmitting end and the receiving end, the data of the first service may be transmitted by using a plurality of data packets.

In another possible implementation, before the sending the first data packet to the receiving end, the method further includes: sending a second data packet to the receiving end, where the second data packet indicates to write second data of the first service to the receiving end, and the second data packet includes the second data of the first service.

In another possible implementation, the second data packet further includes the notification value and the first notification address, and a second value of the notification value indicates that the data migration is not completed.

During transmission of the data of the first service between the transmitting end and the receiving end, the notification value may be carried in an intermediate data packet to indicate that the data migration is not completed, so that the receiving end learns of a data migration status in time.

In another possible implementation, the method further includes: sending a second negotiation message, where the second negotiation message includes a notification value and a second notification address; receiving a third data packet sent by the receiving end, where the third data packet indicates to read first data of a second service from the transmitting end, the third data packet includes the notification value and the second notification address, and a first value of the notification value indicates that data migration is completed; storing the notification value in storage space of the transmitting end that is indicated by the second notification address; and sending a fourth data packet to the receiving end, where the fourth data packet includes the first data of the second service.

A data migration status is learned of in time based on the notification value carried in the data packet, that is, data included in a notification message is combined into the data packet, and no additional notification message needs to be received, thereby simplifying a communication procedure and improving communication efficiency.

In another possible implementation, the third data packet further includes a second storage address and an access permission. The second storage address indicates storage space of the transmitting end, and the access permission indicates that access to the storage space indicated by the second storage address is permitted. The method further includes: reading the first data of the second service from the storage space indicated by the second storage address.

In this case, based on the storage address of the storage space of the transmitting end that is included in the data packet, the receiving end can directly perform a read operation on the storage space of the transmitting end, thereby increasing a data transmission rate.

In another possible implementation, before the receiving the third data packet sent by the receiving end, the method further includes: receiving a fifth data packet sent by the receiving end, where the fifth data packet indicates to read second data of the second service from the transmitting end, the fifth data packet includes the notification value and the second notification address, and a second value of the notification value indicates that the data migration is not completed; and sending a sixth data packet to the receiving end, where the sixth data packet includes the second data of the second service.

During transmission of data of the second service between the transmitting end and the receiving end, the notification value may be carried in an intermediate data packet to indicate that the data migration is not completed, so that the transmitting end learns of a data migration status in time.

According to a fourth aspect, a data transmission method is provided. The method is performed by a receiving end. The method includes: sending a first negotiation message, where the first negotiation message includes a notification value and a first notification address; receiving a first data packet sent by the transmitting end, where the first data packet indicates to write first data of a first service to the receiving end, the first data packet includes the first data of the first service, the notification value, and the first notification address, and a first value of the notification value indicates that data migration is completed; and storing the notification value in storage space of the receiving end that is indicated by the first notification address.

In a possible implementation, the notification value and the first notification address are located in a reserved field of the first data packet.

In another possible implementation, the first data packet further includes a first storage address and an access permission. The first storage address indicates storage space of the receiving end, and the access permission indicates that access to the storage space indicated by the first storage address is permitted. The method further includes: writing the first data of the first service to the storage space indicated by the first storage address.

In another possible implementation, before the receiving the first data packet sent by the transmitting end, the method further includes: receiving a second data packet sent by the transmitting end, where the second data packet indicates to write second data of the first service to the receiving end, and the second data packet includes the second data of the first service.

In another possible implementation, the second data packet further includes the notification value and the first notification address, and a second value of the notification value indicates that the data migration is not completed.

In another possible implementation, the method further includes: receiving a second negotiation message, where the second negotiation message includes a notification value and a second notification address; sending a third data packet to the transmitting end, where the third data packet indicates to read first data of a second service from the transmitting end, the third data packet includes the notification value and the second notification address, a first value of the notification value indicates that data migration is completed, the second notification address indicates storage space of the transmitting end, and the storage space of the transmitting end is used to store the notification value; and receiving a fourth data packet sent by the transmitting end, where the fourth data packet includes the first data of the second service.

In another possible implementation, the third data packet further includes a second storage address and an access permission. The second storage address indicates that storage space of the transmitting end is used to store the first data of the second service, and the access permission indicates that access to the storage space indicated by the second storage address is permitted.

In another possible implementation, before the sending the third data packet to the transmitting end, the method further includes: sending a fifth data packet to the transmitting end, where the fifth data packet indicates to read second data of the second service from the transmitting end, the fifth data packet includes the notification value and the second notification address, and a second value of the notification value indicates that the data migration is not completed; and receiving a sixth data packet sent by the transmitting end, where the sixth data packet includes the second data of the second service.

According to a fifth aspect, a network interface card is provided. The network interface card is configured to perform operation steps of the method performed by the transmitting end or the receiving end in any one of the foregoing aspects or the possible implementations of the foregoing aspects.

According to a sixth aspect, a computer device is provided. The computer device includes a storage, a processor, and a network interface card. The storage is configured to store a group of computer instructions. When the processor executes the group of computer instructions, the processor and the network interface card jointly perform operation steps of the method performed by the transmitting end or the receiving end in any one of the foregoing aspects or the possible implementations of the foregoing aspects.

According to a seventh aspect, a data transmission system is provided. The data transmission system includes a plurality of compute nodes, and the compute nodes perform operation steps of the method performed by the transmitting end or the receiving end in any one of the foregoing aspects or the possible implementations of the foregoing aspects.

According to an eighth aspect, a computer-readable storage medium is provided. The computer-readable storage medium includes computer software instructions. When the computer software instructions are run in a processor, the processor is caused to perform operation steps of the method performed by the transmitting end or the receiving end in any one of the foregoing aspects or the possible implementations of the foregoing aspects.

According to a ninth aspect, a computer program product is provided. When the computer program product is run on a computer, the computer is caused to perform operation steps of the method performed by the transmitting end or the receiving end in any one of the foregoing aspects or the possible implementations of the foregoing aspects.

For technical effects brought by any design manner in the second aspect to the ninth aspect, refer to technical effects brought by the first aspect or different design manners in the first aspect. Details are not described herein again.

Based on the implementations provided in the foregoing aspects, the implementations in this application may be further combined to provide more implementations.

### BRIEF DESCRIPTION OF DRAWINGS

FIG. 1A and FIG. 1B are diagrams of data transmission according to this application;
FIG. 2 is a diagram of an architecture of a data transmission system according to this application;
FIG. 3 is a schematic flowchart of a data transmission method according to this application;
FIG. 4 is a schematic flowchart of a data transmission method according to this application;
FIG. 5 is a diagram of receiving and sending a notification value according to this application;
FIG. 6 is a diagram of a structure of a data transmission apparatus according to this application; and
FIG. 7 is a diagram of a structure of a computer device according to this application.

### DESCRIPTION OF EMBODIMENTS

For ease of understanding, main terms in this application are first explained.

**Message passing interface (Message Passing Interface, MPI):** The message passing interface is a cross-language communication protocol that can be run on a plurality of parallel computing architectures. Message-passing programs can be written in C, C++, and Fortran. For example, data may be exchanged between a process of a transmitting end and a process of a receiving end through the MPI. The MPI supports a point-to-point communication (point-to-point communication) manner and a multi-point communication manner. The point-to-point communication manner is a manner in which one source process communicates with one destination process. The source process is configured to send data. The destination process is configured to receive data. The multi-point communication manner includes a one-to-many communication manner, a many-to-one communication manner, and a many-to-many communication manner. The one-to-many communication manner is a manner in which one source process communicates with a plurality of destination processes. The many-to-one communication manner is a manner in which a plurality of source processes communicate with one destination process. The many-to-many communication manner is a manner in which a plurality of source processes communicate with a plurality of destination processes. The MPI aims at high performance, scalability, and portability.

**Remote direct memory access (Remote Direct Memory Access, RDMA):** Remote direct memory access is a technology that allows direct access to a storage medium of a remote host, bypassing an operating system of the remote host. In other words, data is moved from a storage of one system to that of another system without kernel intervention. Therefore, overheads of storage medium copying and context switching are eliminated, thereby saving compute resources of a processor, improving a system throughput, and reducing network communication latency of a system.

**One-sided communication (one-sided communication):** One-sided communication is a transmission mode in an RDMA protocol, and is applicable to a scenario in which a packet with a large amount of data is transmitted and a peer end is unaware of the transmission. For example, one-sided communication includes an RDMA write operation and an RDMA read operation.

**RDMA device:** The RDMA device is an RDMA packet processing apparatus, and is configured to assemble and send, and receive and process RDMA packets. For example, the RDMA device includes a host channel adapter and a network interface card (Network Interface Card, NIC). The network interface card is referred to as a NIC for short.

HPC cluster: a computer cluster system. The HPC cluster includes a plurality of computers that are connected together using various interconnection technologies. The interconnection technologies may be, for example, IB, a RoCE, or a TCP. HPC provides an ultrahigh floating-point computing capability to meet computing requirements for services such as compute-intensive and massive data processing. The plurality of computers connected together have a comprehensive computing capability to resolve large-scale computing problems. For example, the HPC cluster is used to resolve large-scale computing problems and computing requirements related to industries such as scientific research, weather forecasts, simulation experiments, biopharmaceuticals, gene sequencing, and image processing. When the HPC cluster is used to resolve large-scale computing problems, computing time of data processing can be effectively shortened, and computing precision is improved. Usually, a management node in the HPC cluster may decompose a compute task, and allocate decomposed compute tasks to a plurality of compute nodes, and the plurality of compute nodes complete the compute tasks in parallel.

Generally, an HPC application or a benchmark (benchmark) launches a large quantity of processes. When a plurality of processes exchange data, MPI-based multi-point communication or MPI-based point-to-point communication is used, for example, MPI_Bcast, MPI_Reduce, or MPI_Send. Services for transmitting a large amount of data between processes include neighbor exchange in applications, panel broadcast in a high-performance linpack (High-Performance Linpack, HPL) benchmark, row exchange, and the like. An RNDV protocol may be used to transmit a large amount of data between processes. To be specific, data is migrated through RDMA one-sided communication, and a data migration status is synchronously notified through RDMA two-sided communication. An additional notification message needs to be sent to indicate that data migration is completed. Consequently, a communication procedure is complex and communication efficiency is low.

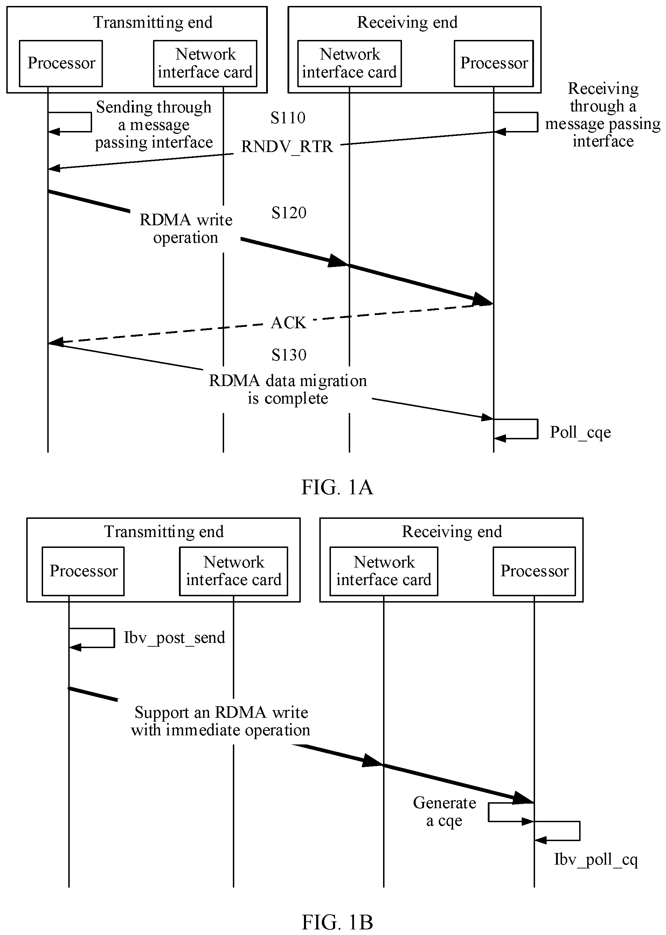

For example, as shown in FIG. 1A and FIG. 1B, diagrams of data transmission according to this application are illustrated. As shown in FIG. 1A, in S110, a receiving end sends a control message to a transmitting end, where the control message is used to authorize an access permission of a storage medium of the receiving end. For example, the control message includes a remote address and an access permission of the receiving end. In S120, the transmitting end performs an RDMA write operation on the receiving end. For example, the transmitting end sends a service message to the receiving end, where the service message includes data, the remote address, and the access permission. In S130, the transmitting end sends a synchronization message to the receiving end, to indicate that data migration is completed. As shown in FIG. 1B, the service message supports an RDMA write with immediate command (for example, rdma write with immediate). In addition to carrying data to the receiving end, the service message may further carry other information, for example, carry data migration completion information, and a completion queue entry (Completion Queue Entry, CQE) is generated at the receiving end. After polling the CQE, the receiving end may perform subsequent operations on corresponding immediate content. However, the receiving end generates the CQE according to rdma write with immediate, and the receiving end performs a next action based on content in the CQE after polling the CQE, which requires participation of a CPU. However, arrival time of the CQE is not deterministic; consequently, the receiving end can only poll in an undifferentiated manner. A non-target CQE obtained during the polling process needs to be temporarily stored, and a target CQE needs to undergo a tag-matching (tag-matching) action. This increases complexity of hardware offload and affects performance.

To resolve a problem that a communication procedure is complex and communication efficiency is low because an additional notification message is sent to indicate that data migration is completed, this application provides a data transmission method. To be specific, completion notification information is carried in a data packet, that is, a transmitting end sends the completion notification information to a network interface card when sending a last data packet of data, to indicate that data migration is completed, so that a receiving end can learn, based on the completion notification information after receiving the last data packet, that the data migration is completed. In other words, completion notification information included in a notification message is combined into a service message, and no additional notification message needs to be sent, thereby simplifying a communication procedure and improving communication efficiency.

The following describes, in detail with reference to accompanying drawings, implementations of the data transmission method provided in this application.

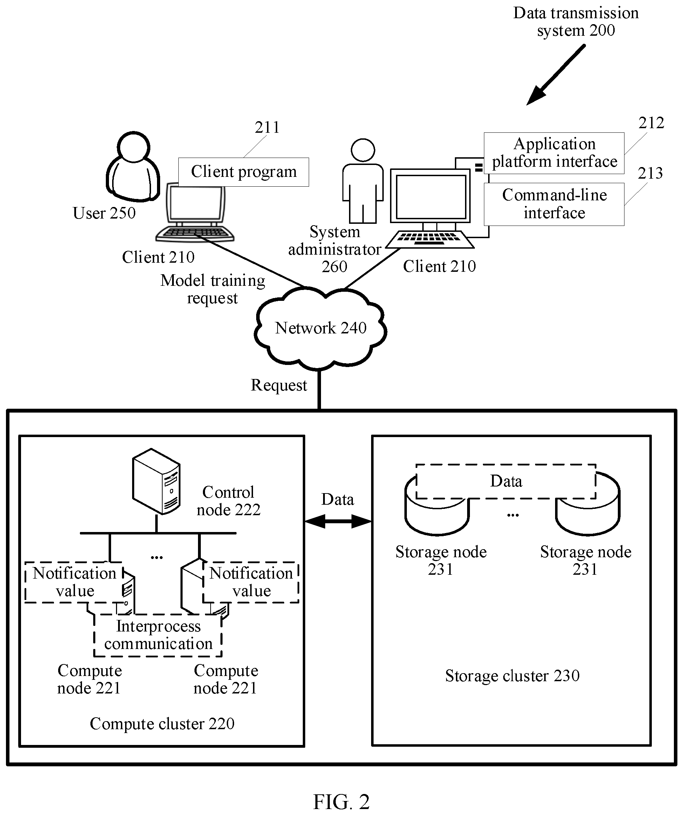

FIG. 2 is a diagram of an architecture of a data transmission system according to this application. As shown in FIG. 2, the data transmission system 200 includes a client 210, a compute cluster 220, and a storage cluster 230.

The storage cluster 230 includes a plurality of storage nodes 231. One storage node 231 includes one or more controllers, a network interface card, and a plurality of hard disk drives. The hard disk drive is configured to store data. The hard disk drive may be a magnetic disk or another type of storage medium, for example, a solid-state drive or a shingled magnetic recording hard disk. The network interface card is configured to communicate with a compute node 221 included in the compute cluster 220. The controller is configured to write data to the hard disk drive or read data from the hard disk drive based on a data read/write request sent by the compute node 221. In a data read/write process, the controller needs to convert an address carried in the data read/write request into an address that can be identified by the hard disk drive.

The compute cluster 220 includes a plurality of compute nodes 221. The compute node 221 may be a compute device, for example, an accelerator card or a server.

In some embodiments, the compute cluster 220 may be of a heterogeneous computational architecture to provide high-performance computing. For example, the compute cluster 220 may include compute units having a computing capability, for example, a central processing unit (central processing unit, CPU), a graphics processing unit (graphics processing unit, GPU), a data processing unit (data processing unit, DPU), a neural processing unit (neural processing unit, NPU), and an embedded neural-network processing unit (neural-network processing unit, NPU), to provide high-performance computing.

In some other embodiments, the plurality of compute nodes 221 are connected through a network device (for example, a switch or a network interface card) based on a high-speed interconnection technology, so that the plurality of compute nodes 221 communicate with each other.

The client 210 communicates with the compute cluster 220 and the storage cluster 230 through a network 240. For example, the client 210 sends a request to the compute cluster 220 through the network 240, to request the compute cluster 220 to perform model training. The network 240 may be an enterprise intranet (for example, a local area network (Local Area Network, LAN)) or an internet (Internet). The client 210 is a computer that is connected to the network 240, and may also be referred to as a workstation (workstation). Different clients may share network resources (such as a compute resource and a storage resource).

In some embodiments, the compute cluster 220 further includes a control node 222. For example, the control node and the compute node may be independent physical devices. For another example, the control node and the plurality of compute nodes may be located in a same physical device. The control node may be a CPU. The plurality of compute nodes include compute units such as a GPU, an NPU, and a DPU. The control node 222 is configured to manage and allocate tasks, and the plurality of compute nodes execute a plurality of tasks in parallel, to increase a data processing rate.

In this application, inter-process communication may be performed between the compute nodes 221. Data may be transmitted between the compute nodes 221 based on an RDMA one-sided operation, to increase a rate of data transmission between the compute nodes 221. In addition, when a last data packet is transmitted between the compute nodes 221, completion notification information is sent to a peer end to learn of, in time, whether data migration is completed.

In some other embodiments, a client program 211 is installed on the client 210, the client 210 runs the client program 211 to display a user interface (user interface, UI), and a user 250 operates the user interface to submit a request. For example, the user 250 operates the user interface to submit the request. After obtaining the request, the control node 222 loads data from the storage cluster 230, and allocates the data to the plurality of compute nodes.

Optionally, a system administrator 260 may invoke, through the client 210, an application platform interface (application platform interface, API) 212 or a command-line interface (command-line interface, CLI) interface 213 to configure system information or the like, for example, a notification policy of a notification value provided in this application.

FIG. 2 is merely a diagram. A device connection manner and a quantity of devices in the data transmission system are not limited in embodiments of this application. For example, the data transmission system may include a plurality of clients. One client may be connected to a plurality of compute nodes. Different clients establish connections to different compute nodes.

The following describes a data transmission process in detail with reference to the accompanying drawings.

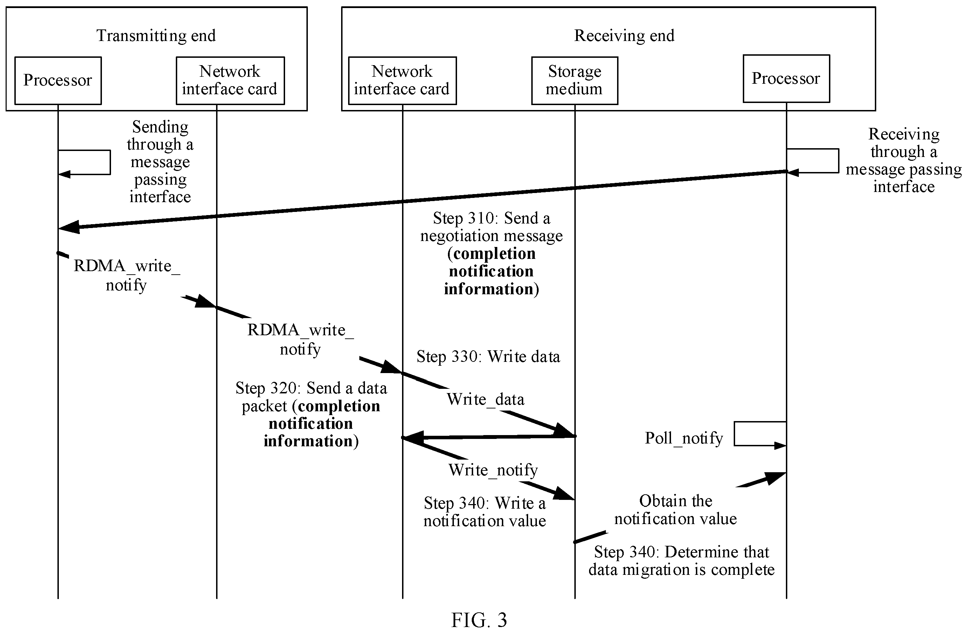

FIG. 3 is a schematic flowchart of a data transmission method according to this application. Inter-process communication between the compute nodes shown in FIG. 2 is used for description herein. The following mainly describes communication between a transmitting end and a receiving end according to an RDMA protocol, and a write operation directly performed by the transmitting end on a storage medium of the receiving end based on an RDMA write operation.

**In step 310, the receiving end sends a negotiation message to the transmitting end.**

Before the receiving end and the transmitting end perform inter-process communication, a processor of the receiving end may apply, to an operating system, for a section of storage space used to store a notification value. The receiving end notifies the transmitting end of the notification value and a notification address. The notification address is an address into which the notification value is to be written within the storage space of the receiving end. The notification value indicates that data migration is completed.

For example, the receiving end sends the negotiation message to the transmitting end, where the negotiation message includes completion notification information. The completion notification information includes the notification address and the notification value. In some embodiments, the completion notification information is located in a reserved field of the negotiation message.

The negotiation message further includes a data storage address. The data storage address indicates storage space that is of the receiving end and in which the data migrated from the transmitting end is stored.

**In step 320, the transmitting end sends at least one data packet to the receiving end.**

The transmitting end receives the negotiation message sent by the receiving end, obtains the completion notification information from the negotiation message, and stores the completion notification information in a storage medium of the transmitting end. For example, the transmitting end obtains the completion notification information from the reserved field of the negotiation message, and stores the completion notification information in a network interface card of the transmitting end or another storage medium. For example, the storage medium includes any one of a cache, a memory, or a flash memory.

When the transmitting end needs to write data to the receiving end, the transmitting end directly performs the write operation on the storage medium of the receiving end based on the RDMA write operation, that is, the transmitting end stores the data in the receiving end through a network interface card of the receiving end based on the data storage address carried in the negotiation message.

The network interface card of the transmitting end may send a data packet to the network interface card of the receiving end. The data packet includes to-be-written data, and the data storage address and an access permission that are carried in the negotiation message. The access permission indicates that access to the storage space indicated by the data storage address is permitted. If the transmitting end sends one data packet to the receiving end, and the to-be-written data can be completely migrated, the transmitting end does not need to send another data packet to the receiving end. If the transmitting end sends one data packet to the receiving end, and the to-be-written data cannot be completely migrated, the transmitting end sends a plurality of data packets to the receiving end to migrate the to-be-written data from the transmitting end to the receiving end. The plurality of data packets may include different data.

It should be noted that, when the transmitting end sends one data packet to the receiving end, the data packet includes the completion notification information. When the transmitting end sends a last data packet in the plurality of data packets to the receiving end, the last data packet includes the completion notification information. The completion notification information is carried in a reserved field of the data packet. The completion notification information includes the notification address and the notification value. The notification address is the address into which the notification value is to be written within the storage space of the receiving end. The notification value indicates that the data migration is completed.

**In step 330, the network interface card of the receiving end writes the data to the storage space indicated by the data storage address.**

The receiving end receives the data packet sent by the transmitting end, and the network interface card of the receiving end writes the data in the data packet to the storage space indicated by the data storage address.

**In step 340, the network interface card of the receiving end sends the completion notification information to the receiving end upon storage of the last data packet in the receiving end, to notify the receiving end that data migration is completed.**

The network interface card of the receiving end may obtain the completion notification information from the reserved field of the data packet after writing the data to the storage space indicated by the data storage address, and store the notification value in the storage space of the receiving end that is indicated by the notification address. The storage space of the receiving end includes storage space of the storage medium of the receiving end or storage space of a storage medium of the network interface card.

The processor of the receiving end may obtain the notification value from the storage space of the receiving end, and determine that the data migration is completed.

Optionally, if the transmitting end needs to send a plurality of data packets to the receiving end, before the transmitting end sends a last data packet to the receiving end, another data packet sent by the transmitting end to the receiving end does not carry the notification value. If the another data packet sent by the transmitting end to the receiving end carries the notification value, a value of the notification value may indicate that the data migration is not completed. The network interface card of the receiving end may store the notification value in the storage space of the receiving end that is indicated by the notification address. The processor of the receiving end may obtain the notification value from the storage space of the receiving end that is indicated by the notification address, and determine that the data migration is not completed.

Optionally, data of a plurality of services may be transmitted between the transmitting end and the receiving end. Negotiation messages of different services sent by the receiving end to the transmitting end may include different notification addresses, so that the network interface card of the receiving end stores notification values indicating completion of data migration for different services in storage space indicated by different notification addresses.

In this case, when the transmitting end directly performs the write operation on the storage medium of the receiving end based on the RDMA write operation, because the receiving end is unaware of whether the data migration is completed, the data packet carries the completion notification information. To be specific, the transmitting end sends the completion notification information to the network interface card when sending the last data packet, to indicate that the data migration is completed, so that the receiving end can learn, based on the completion notification information after receiving the last data packet, that the data migration is completed. In other words, completion notification information included in a notification message is combined into a service message, and no additional notification message needs to be sent, thereby simplifying a communication procedure and improving communication efficiency.

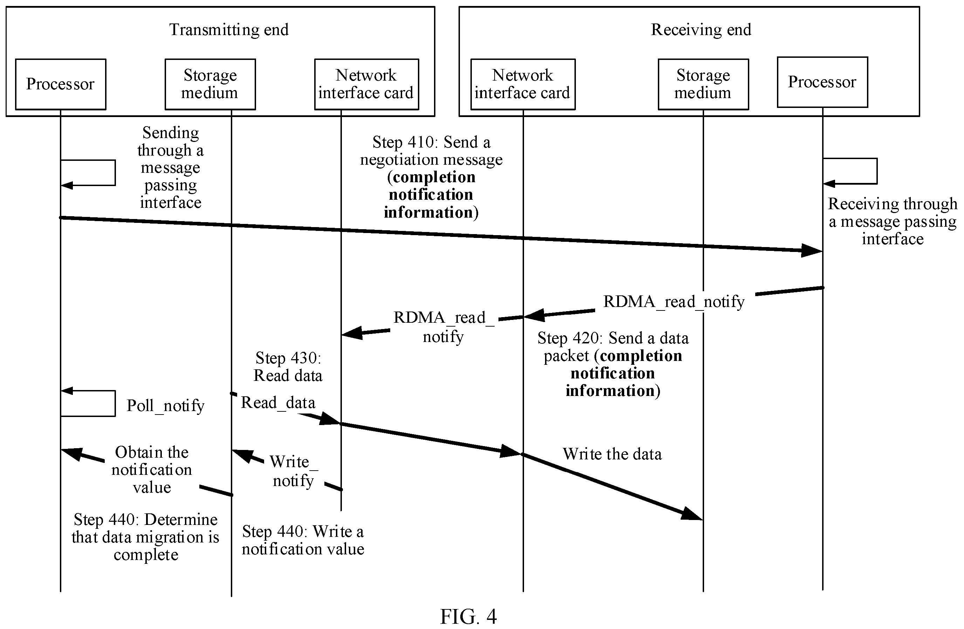

FIG. 4 is a schematic flowchart of a data transmission method according to this application. Inter-process communication between the compute nodes shown in FIG. 2 is used for description herein. The following mainly describes communication between a transmitting end and a receiving end according to an RDMA protocol, and a read operation directly performed by the receiving end on a storage medium of the transmitting end based on an RDMA read operation.

**In step 410, the transmitting end sends a negotiation message to the receiving end.**

Before the transmitting end and the receiving end perform inter-process communication, a processor of the transmitting end may apply, to an operating system, for a section of storage space used to store a notification value. The transmitting end notifies the receiving end of the notification value and a notification address.

For example, the transmitting end sends the negotiation message to the receiving end, where the negotiation message includes completion notification information. The completion notification information includes the notification address and the notification value. The notification address is an address into which the notification value is to be written within the storage space of the transmitting end. The notification value indicates that data migration is completed.

In some embodiments, the completion notification information is located in a reserved field of the negotiation message.

The negotiation message further includes a data storage address. The data storage address indicates storage space that is of the transmitting end and in which data is stored.

**In step 420, the receiving end sends at least one data packet to the transmitting end.**

The receiving end receives the negotiation message sent by the transmitting end, obtains the completion notification information from the negotiation message, and stores the completion notification information in a storage medium of the receiving end. For example, the receiving end obtains the completion notification information from the reserved field of the negotiation message, and stores the completion notification information in a network interface card of the receiving end or another storage medium. For example, the storage medium includes any one of a cache, a memory, or a flash memory.

When the receiving end needs to read data from the transmitting end, the receiving end directly performs the read operation on the storage medium of the transmitting end based on the RDMA read operation, that is, the receiving end directly reads the data from storage space of the storage medium of the transmitting end based on the RDMA read operation.

The network interface card of the receiving end may send a data packet to a network interface card of the transmitting end. The data packet includes the data storage address and an access permission that are carried in the negotiation message. The access permission indicates that access to the storage space indicated by the data storage address is permitted. If the receiving end sends one data packet to the transmitting end, and to-be-read data can be completely migrated, the receiving end does not need to send another data packet to the transmitting end. If the receiving end sends one data packet to the transmitting end, and the to-be-read data cannot be completely migrated, the receiving end sends a plurality of data packets to the transmitting end to migrate the to-be-read data from the transmitting end to the receiving end. Data migrated each time may be different.

It should be noted that, when the receiving end sends one data packet to the transmitting end, the data packet includes the completion notification information. When the receiving end sends a last data packet of the to-be-read data to the transmitting end, the last data packet includes the completion notification information. The completion notification information is carried in a reserved field of the data packet. The completion notification information includes the notification address and the notification value. The notification address is the address into which the notification value is to be written within the storage space of the transmitting end. The notification value indicates that the data migration is completed.

**In step 430, the network interface card of the transmitting end reads the data from the storage space indicated by the data storage address.**

The transmitting end receives the data packet sent by the receiving end, and the network interface card of the transmitting end reads the data from the storage space indicated by the data storage address. The transmitting end sends the data to the network interface card of the receiving end, and the network interface card of the receiving end writes the data to the storage medium of the receiving end.

**In step 440, the network interface card of the transmitting end sends the completion notification information to the transmitting end after sending, to the receiving end, data indicated by the last data packet, to notify the transmitting end that data migration is completed.**

The network interface card of the transmitting end reads the data from the storage space indicated by the data storage address, and may obtain the completion notification information from the reserved field of the data packet after sending the read data to the receiving end, and store the notification value in the storage space of the transmitting end that is indicated by the notification address. The storage space of the transmitting end includes storage space of the storage medium of the transmitting end or storage space of a storage medium of the network interface card.

It should be noted that a sequence in which the network interface card of the receiving end writes the data to the storage medium of the receiving end and the network interface card of the transmitting end stores the notification value in the storage space of the transmitting end that is indicated by the notification address is not limited in this application.

The processor of the transmitting end may obtain the notification value from the storage space of the transmitting end, and determine that the data migration is completed.

Optionally, if the receiving end needs to send a plurality of data packets to the transmitting end, before the receiving end sends a last data packet to the transmitting end, another data packet sent by the receiving end to the transmitting end does not carry the notification value. If the another data packet sent by the receiving end to the transmitting end carries the notification value, a value of the notification value may indicate that the data migration is not completed. The network interface card of the transmitting end may store the notification value in the storage space of the transmitting end that is indicated by the notification address. The processor of the transmitting end may obtain the notification value from the storage space of the transmitting end, and determine that the data migration is not completed.

In this case, when the receiving end directly performs the read operation on the storage medium of the transmitting end based on the RDMA read operation, because the transmitting end is unaware of whether the data migration is completed, the data packet carries the completion notification information. To be specific, the receiving end sends the completion notification information to the network interface card when sending the last data packet, to indicate that the data migration is completed, so that the transmitting end can learn, based on the completion notification information after receiving the last data packet, that the data migration is completed. In other words, completion notification information included in a notification message is combined into a service message, and no additional notification message needs to be sent, thereby simplifying a communication procedure and improving communication efficiency.

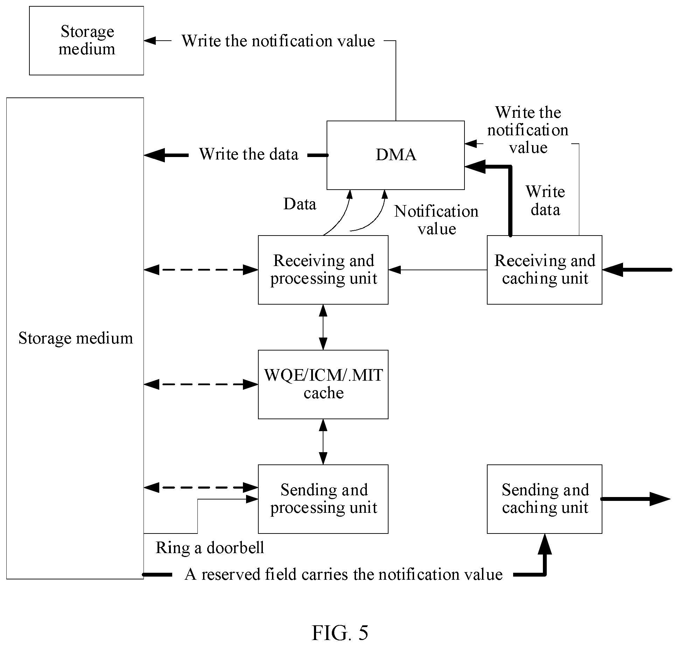

It may be understood that any compute node has the foregoing functions of receiving and sending the notification value. For example, FIG. 5 is a diagram of receiving and sending a notification value according to this application. It is assumed that a network interface card of a compute node performs functions of receiving and sending a notification value.

A sending and processing unit obtains a notification value and a notification address from a storage medium, carries the notification value and the notification address in a reserved field of a data packet, and caches the data packet in a sending and caching unit to wait for sending the data packet.

The data packet is received and parsed to obtain the notification value, the notification address, data, and a storage address. A receiving and caching unit caches the data, and a receiving and processing unit obtains the data packet from the receiving and caching unit, parses the data packet to obtain the notification value, the notification address, the data, and the storage address. Through DMA, the notification value is stored in storage space indicated by the notification address, and the data is stored in storage space indicated by the storage address.

Table 1 shows a comparison between communication performance of write_with_notify and communication performance of a conventional solution in the case of a same bandwidth and different packet sizes. It can be learned that the solution of this application has significant performance advantages in a medium- and large-sized data packet scenario. Moreover, as the bandwidth increases, a range of data packets that benefit from the solution becomes larger.

**Table 1**

| Msg_size (B) | Latency before optimization (µs) | | | Latency before optimization (µs) | | | Performance improvement | | |
|---|---|---|---|---|---|---|---|---|---|
| | 100 Gb | 200 Gb | 400 Gb | 100 Gb | 200 Gb | 400 Gb | 100 Gb | 200 Gb | 400 Gb |
| 8192 | 2.85536 | 2.52768 | 2.36384 | 0.65536 | 0.32768 | 0.16384 | 335.69% | 671.39% | 1342.77% |
| 16384 | 3.51072 | 2.85536 | 2.52768 | 1.31072 | 0.65536 | 0.32768 | 167.85% | 335.69% | 671.39% |
| 32768 | 4.82144 | 3.51072 | 2.85536 | 2.62144 | 1.31072 | 0.65536 | 83.92% | 167.85% | 335.69% |
| 65536 | 7.44288 | 4.82144 | 3.51072 | 5.24288 | 2.62144 | 1.31072 | 41.96% | 83.92% | 167.85% |
| 131072 | 12.68576 | 7.44288 | 4.82144 | 10.48576 | 5.24288 | 2.62144 | 20.98% | 41.96% | 83.92% |
| 262144 | 23.17152 | 12.68576 | 7.44288 | 20.97152 | 10.48576 | 5.24288 | 10.49% | 20.98% | 41.96% |
| 524288 | 44.14304 | 23.17152 | 12.68576 | 41.94304 | 20.97152 | 10.48576 | 5.25% | 10.49% | 20.98% |
| 1048576 | 86.08608 | 44.14304 | 23.17152 | 83.88608 | 41.94304 | 20.97152 | 2.62% | 5.25% | 10.49% |

It may be understood that, to implement functions in the foregoing embodiments, a compute node includes corresponding hardware structures and/or software modules for performing the functions. A person skilled in the art should be easily aware that, in this application, the units and the method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

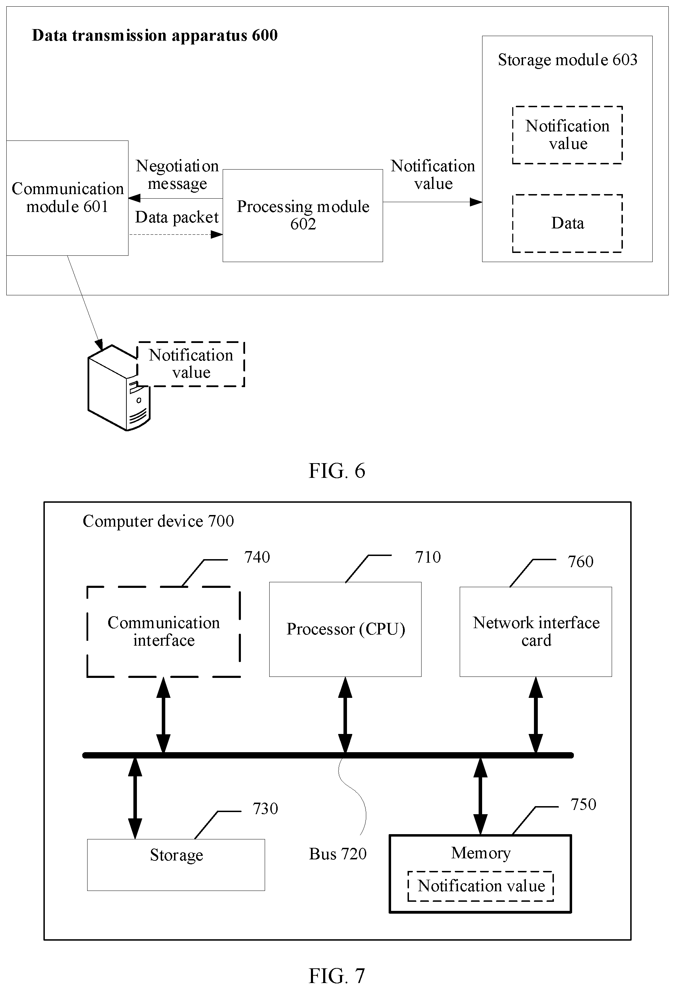

The foregoing describes, in detail with reference to FIG. 1A to FIG. 5, the data transmission method provided in this application. The following describes, with reference to FIG. 6, an apparatus provided in this application. These apparatuses may be configured to implement functions of the compute node in the foregoing method embodiments, and therefore can also implement beneficial effects of the foregoing method embodiments. In this embodiment, the apparatus may be the compute node shown in FIG. 2, or may be a module (for example, a chip) used in the compute node.

As shown in FIG. 6, a data transmission apparatus 600 includes a communication module 601, a processing module 602, and a storage module 603.

The data transmission apparatus 600 is configured to implement functions of the receiving end in the method embodiment shown in FIG. 3.

The communication module 601 is configured to send a negotiation message, where the negotiation message includes a notification value and a notification address, and the notification value indicates that data migration is completed. For example, the communication module 601 is configured to perform step 310.

The communication module 601 is further configured to receive a data packet, where the data packet indicates to write data included in the data packet to the receiving end, the data packet includes the data and the notification address of the notification value, and the notification address indicates storage space that is of the receiving end and in which the notification value is stored. A last data packet of the data sent by a transmitting end includes completion notification information.

The processing module 602 is configured to send the completion notification information to the receiving end upon storage of the last data packet to the receiving end, to notify the receiving end that data migration is completed.

The storage module 603 is configured to store the notification value, the data, and the like, so that the data transmission apparatus learns in time that the data migration is completed.

It should be understood that the data transmission apparatus 600 in this embodiment of this application may be implemented by using an application-specific integrated circuit (application-specific integrated circuit, ASIC), or a programmable logic device (programmable logic device, PLD). The PLD may be a complex programmable logic device (complex programmable logic device, CPLD), a field-programmable gate array (field-programmable gate array, FPGA), generic array logic (generic array logic, GAL), or any combination thereof. When the data transmission apparatus 600 may alternatively be implemented in software to perform the method shown in FIG. 3 or FIG. 4, the data transmission apparatus 600 and each module of the data transmission apparatus 600 may alternatively be implemented as software modules.

The data transmission apparatus 600 according to this embodiment of this application may correspondingly perform the method described in embodiments of this application. In addition, the foregoing operations and other operations and/or functions of units in the data transmission apparatus 600 are respectively for implementing corresponding procedures of methods in FIG. 3 or FIG. 4. For brevity, details are not described herein again.

FIG. 7 is a diagram of a structure of a computer device 700 according to this application. As shown in FIG. 7, the computer device 700 includes a processor 710, a bus 720, a storage 730, a communication interface 740, a memory 750 (which may also be referred to as a main memory (main memory) unit), and a network interface card 760. The processor 710, the network interface card 760, the storage 730, the memory 750, and the communication interface 740 are connected through the bus 720.

It should be understood that, in this embodiment, the processor 710 may be a CPU, or the processor 710 may be another general-purpose processor, a digital signal processor (digital signal processor, DSP), an ASIC, an FPGA or another programmable logic device, a discrete gate or a transistor logic device, a discrete hardware component, or the like. The general-purpose processor may be a microprocessor or any conventional processor or the like.

The computer device 700 may further include a graphics processing unit (graphics processing unit, GPU), a neural network processing unit (neural network processing unit, NPU), a microprocessor, an ASIC, or one or more integrated circuits configured to control program execution in the solutions of this application.

The communication interface 740 is configured to implement communication between the computer device 700 and an external device or a component.

In this application, when the computer device 700 is configured to implement functions of the receiving end or the receiving end shown in FIG. 3 or FIG. 4, the communication interface 740 is configured to send a negotiation message or receive a data packet, or the communication interface 740 is configured to receive a negotiation message or send a data packet, or the like. In this way, the network interface card 760 is configured to store a notification value in storage space indicated by a notification address, and the processor 710 determines that data migration is completed.

The bus 720 may include a path, configured to transmit information between the foregoing components (such as the processor 710, the memory 750, and the storage 730). In addition to a data bus, the bus 720 may further include a power bus, a control bus, a status signal bus, and the like. However, for ease of clear description, various types of buses are marked as the bus 720 in the figure. The bus 720 may be a peripheral component interconnect express (Peripheral Component Interconnect Express, PCIe) bus, an extended industry standard architecture (extended industry standard architecture, EISA) bus, a unified bus (unified bus, Ubus or UB), a compute express link (compute express link, CXL), cache coherent interconnect for accelerators (cache coherent interconnect for accelerators, CCIX), or the like. The bus 720 may be classified into an address bus, a data bus, a control bus, and the like.

In an example, the computer device 700 may include a plurality of processors. The processor may be a multi-core (multi-CPU) processor. The processor herein may be one or more devices, circuits, and/or compute units configured to process data (for example, computer program instructions).

It should be noted that, in FIG. 7, only an example in which the computer device 700 includes one processor 710 and one storage 730 is used. Herein, the processor 710 and the storage 730 each indicate a type of component or device. In a specific embodiment, a quantity of components or devices in each type may be determined based on a service requirement. For example, the computer device 700 includes a plurality of GPUs or NPUs.

The memory 750 may be a volatile memory pool or a nonvolatile memory pool, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory 750 is configured to store a notification value and the like.

The storage 730 may correspond to a storage medium configured to store information such as the notification value in the foregoing method embodiments, for example, a magnetic disk, for example, a mechanical hard disk or a solid-state drive.

The computer device 700 may be a general-purpose device or a dedicated device. For example, the computer device 700 may alternatively be a server or another device having a computing capability.

It should be understood that the computer device 700 according to this embodiment may correspond to the data transmission apparatus 600 in embodiments, and may correspond to a corresponding body that performs any method in FIG. 3 or FIG. 4. In addition, the foregoing and other operations and/or functions of the modules in the data transmission apparatus 600 are respectively for implementing corresponding procedures of the methods in FIG. 3 or FIG. 4. For brevity, details are not described herein again.

The method steps in embodiments may be implemented in a hardware manner, or may be implemented by executing software instructions by a processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a compute device. Certainly, the processor and the storage medium may alternatively exist in the compute device as discrete components.

All or some of the foregoing embodiments may be implemented by using software, hardware, firmware, or any combination thereof. When software is used to implement embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape, may be an optical medium, for example, a digital video disc (digital video disc, DVD), or may be a semiconductor medium, for example, a solid-state drive (solid-state drive, SSD). The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A data transmission method, wherein the method comprises:
sending, by a receiving end, a first data storage address and completion notification information to a transmitting end;
storing, by the transmitting end, data in the receiving end through a network interface card of the receiving end based on the first data storage address, wherein the transmitting end sends the completion notification information to the network interface card when sending a last data packet of the data; and
sending, by the network interface card, the completion notification information to the receiving end upon storage of the last data packet in the receiving end, to notify the receiving end that migration of the data is completed.

2. The method according to claim 1, wherein the transmitting end communicates with the receiving end according to a remote direct memory access RDMA protocol, and the sending, by the receiving end, the first data storage address and the completion notification information to the transmitting end comprises:
carrying, by the receiving end, the completion notification information in a reserved field of a negotiation message of the first data storage address, and sending the negotiation message to the transmitting end.

3. The method according to claim 1 or 2, wherein when the transmitting end sends the last data packet of the data, the completion notification information is carried in a reserved field of the last data packet.

4. The method according to claim 3, wherein the method further comprises:
obtaining, by the network interface card, the completion notification information from the reserved field of the data packet after receiving the data packet.

5. The method according to any one of claims 1 to 4, wherein the completion notification information comprises a notification address and a notification value, the notification address is an address into which the notification value is to be written at the receiving end, and the notification value indicates that migration of the data is completed; and
the method further comprises:
obtaining, by the network interface card, the completion notification information from the data packet, and writing the notification value to the notification address, and obtaining, by the receiving end, the notification value from the notification address, to confirm that migration of the data is completed.

6. The method according to any one of claims 1 to 5, wherein the data is data written from the transmitting end to the receiving end, and the first data storage address indicates storage space that is of the receiving end and to which the data is written.

7. The method according to claim 1, wherein the method comprises:
reading, by the receiving end, data from the transmitting end based on the second data storage address, wherein the second data storage address indicates storage space that is of the transmitting end and from which the data is read.

8. The method according to claim 7, wherein the reading, by the receiving end, the data from the transmitting end based on the second data storage address comprises:
sending, by the transmitting end, the second data storage address and completion notification information to the receiving end;
reading, by the receiving end, the data through a network interface card of the transmitting end based on the second data storage address, wherein the receiving end sends the completion notification information to the network interface card when sending a last data packet corresponding to the data; and
sending, by the network interface card, the completion notification information to the transmitting end after sending, to the receiving end, data to be read as indicated by the last data packet, to notify the transmitting end that migration of the data is completed.

9. A data transmission system, wherein the data transmission system comprises a transmitting end and a receiving end, the receiving end comprises a network interface card, and the transmitting end comprises a network interface card;
the receiving end is configured to send a first data storage address and completion notification information to the transmitting end;
the transmitting end is configured to store data in the receiving end through the network interface card of the receiving end based on the first data storage address, wherein the transmitting end sends the completion notification information to the network interface card when sending a last data packet of the data; and
the network interface card is configured to send the completion notification information to the receiving end upon storage of the last data packet in the receiving end, to notify the receiving end that migration of the data is completed.

10. The system according to claim 9, wherein the transmitting end communicates with the receiving end according to a remote direct memory access RDMA protocol; and
the receiving end is configured to carry the completion notification information in a reserved field of a negotiation message of the first data storage address, and send the negotiation message to the transmitting end.

11. The system according to claim 9 or 10, wherein when the transmitting end sends the last data packet of the data, the completion notification information is carried in a reserved field of the last data packet.

12. The system according to claim 11, wherein
the network interface card is configured to obtain the completion notification information from the reserved field of the data packet after receiving the data packet.

13. The system according to any one of claims 9 to 12, wherein the completion notification information comprises a notification address and a notification value, the notification address is an address into which the notification value is to be written at the receiving end, and the notification value indicates that migration of the data is completed; and
the network interface card is configured to obtain the completion notification information from the data packet, and write the notification value to the notification address, and the receiving end obtains the notification value from the notification address, to confirm that migration of the data is completed.

14. The system according to any one of claims 9 to 13, wherein
the transmitting end is configured to send a second data storage address and completion notification information to the receiving end;
the receiving end is configured to read data through the network interface card of the transmitting end based on the second data storage address, wherein the receiving end sends the completion notification information to the network interface card when sending a last data packet corresponding to the data; and
the network interface card is configured to send the completion notification information to the transmitting end after sending, to the receiving end, data to be read as indicated by the last data packet, to notify the transmitting end that migration of the data is completed.

15. The system according to claim 14, wherein the transmitting end communicates with the receiving end according to the remote direct memory access RDMA protocol; and
the transmitting end is configured to carry the completion notification information in a reserved field of a negotiation message of the second data storage address, and send the negotiation message to the receiving end.

16. The system according to claim 14 or 15, wherein when the receiving end sends the last data packet corresponding to the data, the completion notification information is carried in a reserved field of the data packet.

17. The system according to claim 16, wherein
the network interface card is configured to obtain the completion notification information from the reserved field of the data packet after receiving the data packet.

18. The system according to any one of claims 14 to 17, wherein the completion notification information comprises a notification address and a notification value, the notification address is an address into which the notification value is to be written at the transmitting end, and the notification value indicates that migration of the data is completed; and
the network interface card is configured to obtain the completion notification information from the data packet, and write the notification value to the notification address, and the transmitting end obtains the notification value from the notification address, to confirm that migration of the data is completed.
